# EUROPEAN PATENT APPLICATION

(11) **EP 1 816 058 A1**
(43) Date of publication of application: **08.08.2007**
(21) Application number: 07002365.0
(22) Date of filing: 02.02.2007
(51) Int. Cl.: B62D 33/06, B66F 9/10, E02F 9/10, B62D 53/00

(54) **Multi-purpose lorry with rotating and translating driver's cab**

(30) Priority: 07.02.2006 IT MC20060015
(71) Applicant: BARIGELLI & CICCARELLI S.P.A., 62011 Cingoli MC (IT)
(72) Inventor: Ciccarelli, Guido, 62011 Cingoli (MC) (IT); Barigelli, Ottavio, 60035 Jesi (AN) (IT)
(74) Representative: Baldi, Claudio

(57) **Abstract**

The present invention relates to a multi-purpose lorry (A) with mobile driver's cab (C) and multiple attachments (P1,P2,P3,P4) and power take-off to support and actuate different tools used for specific agricultural or industrial applications.
In particular, the said mobile cab (C) is able to move in three different directions, since it translates both longitudinally and transversally, and rotates around itself on a vertical axis.

## Description

The present patent application relates to a multi-purpose lorry with rotating and translating driver's cab, designed to be selectively and/or simultaneously equipped with different types of tools for specific agricultural or industrial applications, such as, for example, grass mowing blades, hedge trimmers, excavating buckets, forklifts, articulated arms, etc.

The large majority of machines that are currently available on the market are designed to perform a single operation, for which they are equipped with the most convenient tools that can only be interchanged with other tools of the same type, that is to say with very similar actuation and movement modes.

In any case, the anchoring points of the tools are rigidly predefined and situated in predefined locations, which are usually positioned on the front or the back of the machine.

In view of this, the machines of known type have either a fixed cab or a cab with maximum rotation of 180°, especially if the attachments are located on the back, in such a way that the operator can have a large visual field of the tool during its use.

In the agricultural sector, for instance, the so-called retroverted tractors are characterised by a cab able to rotate on its vertical axis in such a way that the operator can move in reverse gear while maintaining full control of the tools and their operation.

The purpose of the present invention is to provide a multi-purpose lorry designed to be equipped with a plurality of tools of different type, whose attachments can be selected by the users according to their needs or requirements.

The lorry of the invention is provided with a bearing frame having four attachments for tools, one on the front, one on the side, one on the back and one on the top load surface of the lorry.

Each attachment is also provided with power take-offs, which can be of mechanical type, such as a driving shaft, or of hydraulic type, such as two automatic couplings used to take a constant quantity of pressurised oil from the pump that is an integral part of the hydraulic system of the lorry.

In order to provide total visibility for the operator in the driver's cab, when moving in both directions and during the operation of the tools, regardless of the position of the tool, the lorry of the invention has been provided with a mobile cab, which is able to move in three different directions, being free to translate both longitudinally and transversally and rotate around its vertical axis.

For major clarity the description of the lorry of the invention continues with reference to the enclosed drawings, which are intended for purpose of illustration only and not in a limiting sense, whereby:
- fig. 1 is a diagrammatic side view of the lorry of the invention, with the driver's cab facing the front and translated in forward position;
- fig. 2 is basically the same as fig. 1, except for the fact that the driver's cab is facing the back and translated in backward position;
- fig. 3 is a side view of the articulated structure on which the platform of the driver's cab is fixed, being of rotating type and translating both in longitudinal and transversal direction;
- fig. 4 is a top view of the articulated structure on which the platform of the driver's cab is fixed, being of rotating type and translating both in longitudinal and transversal direction;
- fig. 5 is a side view of the articulated structure on which the platform of the driver's cab is fixed, being of rotating type and translating in longitudinal direction only;
- fig. 6 is a top view of the articulated structure on which the platform of the driver's cab is fixed, being of rotating type and translating in longitudinal direction only;
- fig. 6A is an enlarged view of a detail of fig. 6;
- fig. 7 is a side view of the articulated structure on which the platform of the driver's cab is fixed, with longitudinal translation and provided with a platform that rotates around a vertical axis;
- fig. 7A is an enlarged view of a detail of fig. 7;
- fig. 8 is a top view of the articulated structure on which the platform of the driver's cab is fixed, with longitudinal translation and provided with a platform that rotates around a vertical axis.

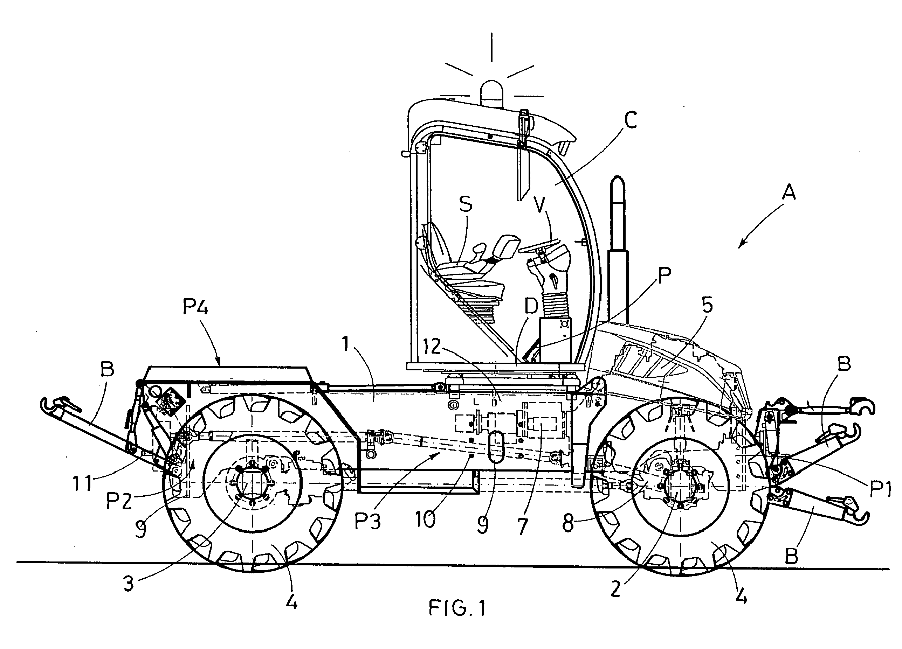

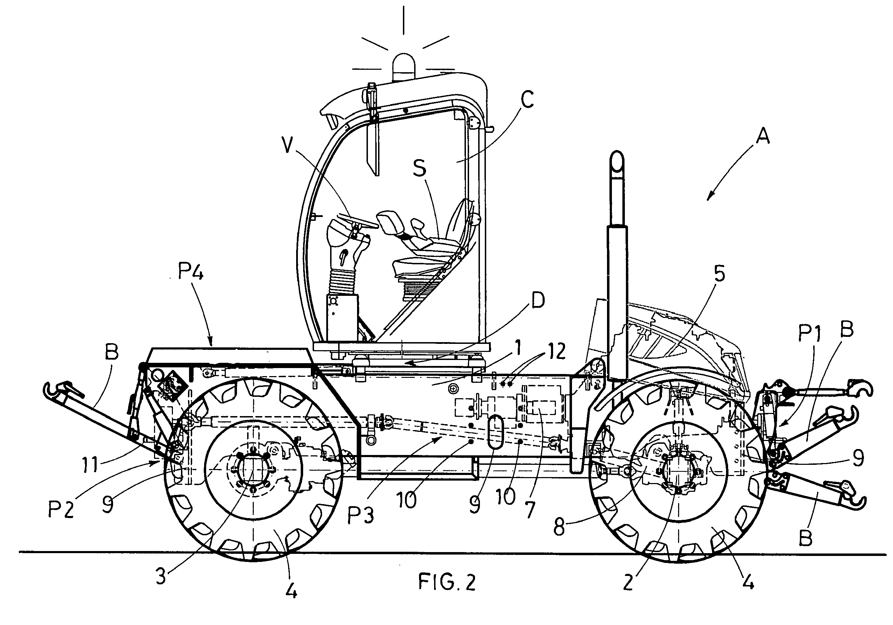

With reference to figs. 1 and 2, the lorry (A) of the invention comprises a frame (1) on which at least two axles, a front axle (2) and a rear axle (3), are mounted with or without the interposition of suspensions, fixed to the wheels (4).

The lorry is traditionally provided with an endothermic engine (5), a hydraulic-mechanical transmission (7), steering jacks (8) and all the other organs of known type that are necessary for operation.

The first peculiarity of the lorry of the invention consists in the fact that the frame (1) has at least four attachments (P1, P2, P3 and P4) for the tools that are installed on the lorry, and in particular: a front attachment (P1), a rear attachment (P2), a lateral attachment (P3) and a top attachment (P4).

Each attachment comprises a plate (9) with suitable characteristics and strength and some holes (10) used to fix the flange or the frame that supports the tool.

Each attachment also comprises a power take-off used to actuate the tool, it being provided that the power take-off can be of mechanical or hydraulic type.

In the first case, the power take-off consists in a driving shaft (1), whereas in the second case it consists in a pair of automatic couplings (12) used to take a constant quantity of pressurised oil from the pump that is an integral part of the hydraulic system of the lorry (A).

In figs. 1 and 2, letter (B) is used to identify some mechanical devices with articulated arms, designed to be applied in the attachments to lift and support the said tools, which are not shown in the enclosed figures.

A further peculiarity of the lorry (A) of the invention consists in the fact that it is provided with a mobile driver's cab (C), whose platform (C1) is designed to translate both in longitudinal and transversal direction, as well as rotate around itself around a vertical axis passing through the centre of the platform.

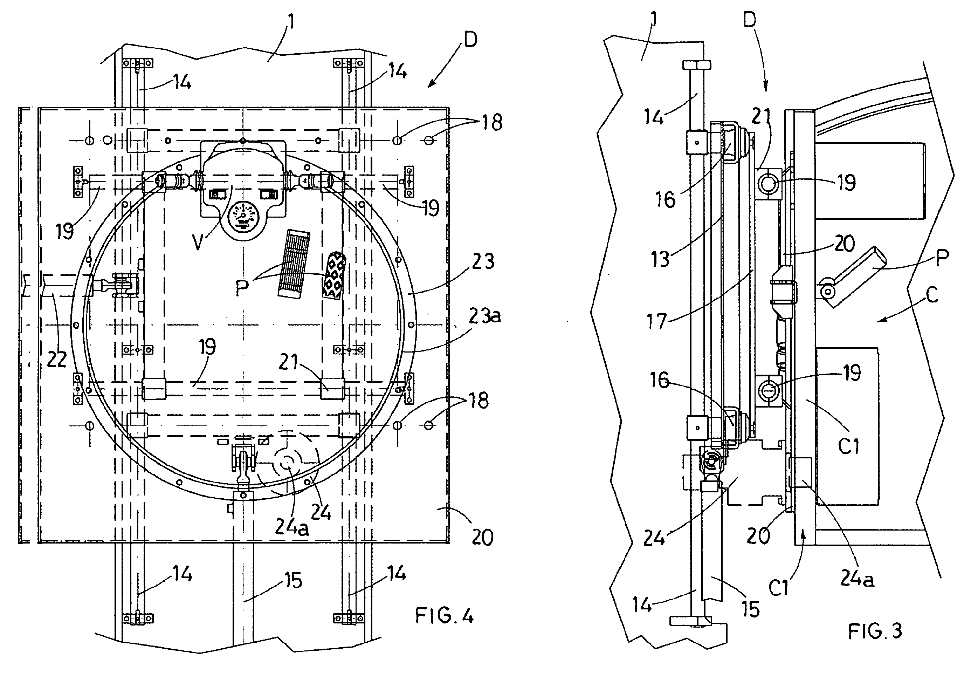

With reference to figures 3 and 4, the driver's cab (C) is fixed above the lorry (A) with the interposition of an articulated structure (D) used for support or connection that comprises a first lower platform (13) that rests and translates along a parallel pair of cylindrical rails (14) that are rigidly fixed above the lorry (A) with longitudinal direction.

The said first platform (13) is moved by means of a dedicated hydraulic cylinder (15) positioned between the frame (1) and the platform (13).

Attention is drawn on the fact that anti-vibration devices (16) of known type are fixed above the platform (13) in order to soften the transmission of vibrations from the frame (1) to the cab (C).

With the interposition of the said anti-vibration devices (16), a second platform (17) is mounted above the first platform (13), being stopped by means of screws that engage in corresponding holes (18) drilled on the first platform (17), which is provided with a higher number of holes (18) than the minimum number, in such a way as to provide multiple fixing points for the platform that can consequently be moved rightwards or leftwards according to the specific needs.

Another parallel pair of rails (19) is fixed above the second platform (17), with transversal direction, that is to say in orthogonal direction to the rails (14).

The rails (19) act as support and track for the transversal travels of a third platform (20) coupled to the rails (19) by means of four bushings (21).

The third platform (20) is moved by means of a dedicated hydraulic cylinder (22) positioned between the second platform (17) and the third platform (20).

A coupling attachment (23) is applied on the third platform (20), being a mechanical organ designed to support a body that rotates around itself around itself around a plane orthogonal to the plane where the coupling attachment is situated, passing through the centre of the coupling attachment.

The coupling attachment (23) supports the platform (C1) of the cab (C), in such a way that the platform (C1) rotates around itself and around a vertical orthogonal axis.

The rotating coupling attachment (23) is provided with internal teeth (23a) that engage with the pinion (24a) of a motor reducer (24) fixed to the platform (20).

If the platform (C1) is joined with the cab (C), as shown in the embodiment illustrated in figures 3 and 4, also the cab rotates around itself and around a vertical orthogonal axis.

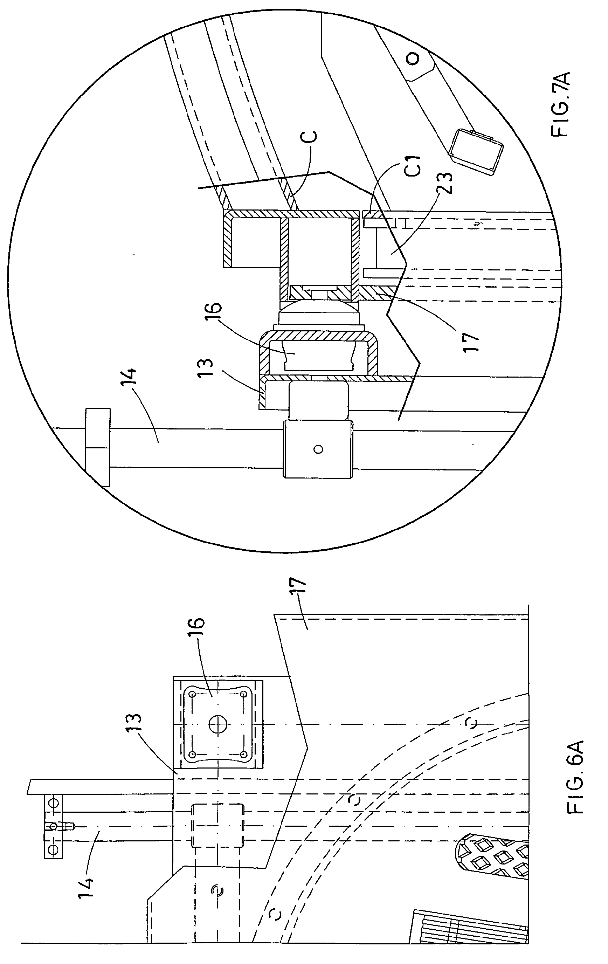

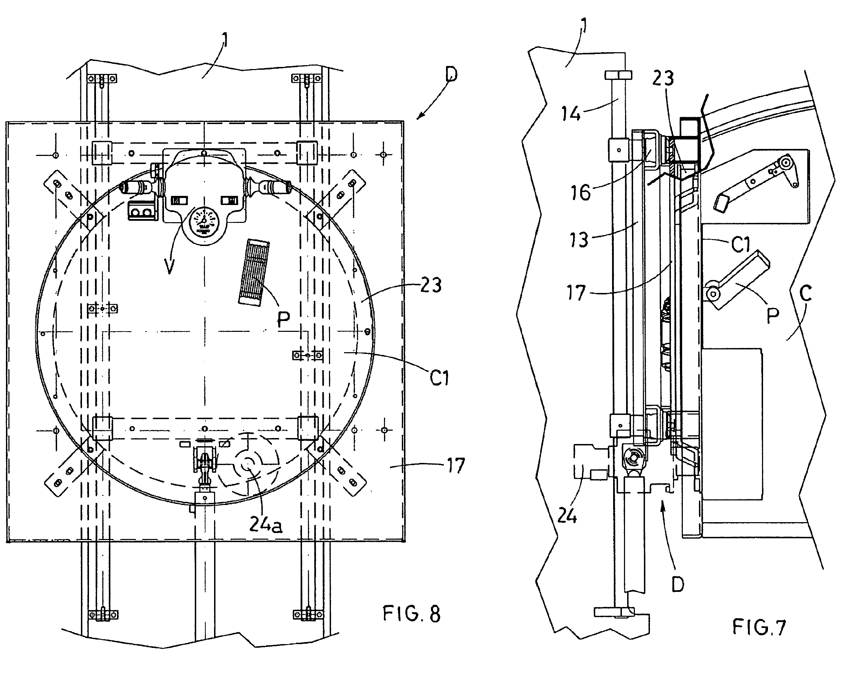

Whereas, if the platform (C1) is not joined with the cab (C), as shown in the embodiment illustrated in figures 7 and 8, then the cab remains stopped until the platform (C1) rotates around itself and around a vertical orthogonal axis.

In the second embodiment, all driving and control means, such as the seat (S), pedals (P) and steering wheel (V) must be fixed to the rotating platform (C1) in such a way that the operator can remain comfortably seated and check the side of the lorry that needs to be controlled, it being also evident that in this case the cab (C) must be provided with glass windows on all its lateral walls.

In this regard, attention is drawn on fig. 7A.

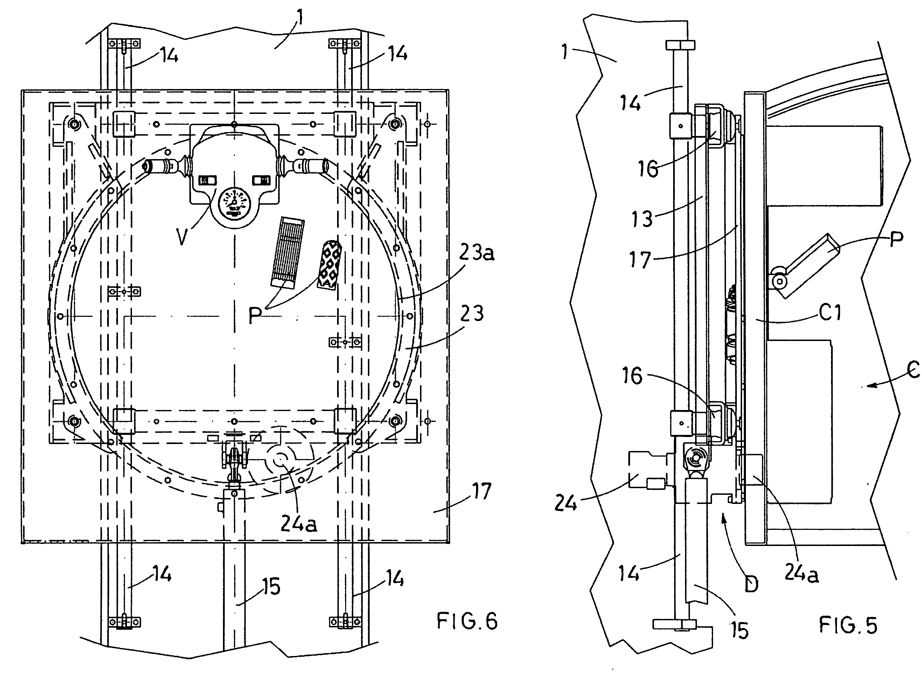

Figures 5 and 6 illustrate an alternative constructive embodiment of the lorry of the invention, in which the platform (C) rotates around itself, translates longitudinally, but not transversally, due to the lack of the aforementioned pair of transversal rails (19).

Evidently, in the latter embodiment the coupling attachment (23) is directly applied to the second platform (17).

## Claims

1. Multi-purpose lorry with mobile driver's cab, of the type comprising a frame (1) on which a rotating cab (C) is mounted with at least two axles (2 and 3) in order to support wheels (4), an endothermic engine (5), a hydraulic-mechanical transmission (7), steering jacks (8) and all the organs of known type that are necessary for operation, lorry (A) being **characterised by** the fact that the frame (1) has at least four attachments (P1, P2, P3 and P4) for the tools that are installed on the lorry, and in particular, a front attachment (P1), a rear attachment (P2), a lateral attachment (P3) and a top attachment (P4); it being provided that each attachment comprises a plate (9) with suitable characteristics and strength and some holes (10) used to fix the flange or the frame that supports the tool, together with a power take-off used to actuate the tool, it being provided that the power take-off can be of mechanical or hydraulic type.

2. Lorry as claimed in claim 1, **characterised by** the fact that the platform (C1) of the cab (C) is fixed over a coupling attachment (23) that rotates around a vertical axis and is actuated by a motor reducer (24).

3. Lorry as claimed in above claim, **characterised in that** the coupling attachment (23) is applied over an articulated support structure (D), which comprises:
- a first lower platform (13) actuated by a hydraulic cylinder (15) that translates along a parallel pair of cylindrical rails (14) that are rigidly fixed above the lorry (A) in longitudinal direction;
- a second platform (17) mounted above the first platform (13) and stopped by means of screws that engage in corresponding holes (18) drilled on the platform below (17), which is provided with a higher number of holes than the minimum number;
- another parallel pair of rails (19) fixed above the second platform (17), with transversal direction;
- a third platform (20) that moves along the said rails (19) and is actuated by a hydraulic cylinder (22) positioned between the second platform (17) and the third platform (20), on which the coupling attachment (23) is applied.

4. Lorry as claimed in claim 2, **characterised in that** the coupling attachment (23) is applied above an articulated support structure (D), which comprises:
- a first lower platform (13) actuated by a hydraulic cylinder (15) that translates along a parallel pair of cylindrical rails (14) that are rigidly fixed above the lorry (A) in longitudinal direction;
- a second platform (17), on which the coupling attachment (23) is applied, mounted above the first platform (13) and stopped by means of screws that engage in corresponding holes (18) drilled on the platform above (17), which is provided with a higher number of holes than the minimum number;

5. Lorry as claimed in one of the above claims, **characterised by** the fact that the platform (C1) of the driver's cab (C) is joined with the cab (C), which rotates around itself and around a vertical axis orthogonal to the plane where the coupling attachment (23) is situated and passing through the centre of the said coupling attachment.

6. Lorry as claimed in any of the above claims 1 to 4, **characterised by** the fact that the platform (C1) of the driver's cab (C) is not joined with the cab (C), which remains stopped until the platform (C1) rotates around itself and around a vertical axis orthogonal to the plane where the coupling attachment (23) is situated and passing through the centre of the said coupling attachment.
